# EUROPÄISCHE PATENTANMELDUNG

(11) **EP 4 163 604 A1**
(43) Veröffentlichungstag der Anmeldung: **12.04.2023**
(21) Anmeldenummer: 22200530.8
(22) Anmeldetag: 10.10.2022
(51) Int. Cl.: G01F 23/02, G01F 23/80, F16D 33/00

(54) **FÜLLWINKELBESTIMMUNG ZUR FÜLLUNG EINER KUPPLUNG**

(30) Priorität: 11.10.2021 DE 102021126259
(71) Anmelder: Voith Patent GmbH, 89522 Heidenheim (DE)
(72) Erfinder: Ohr, Thomas, 74564 Crailsheim (DE)
(74) Vertreter: Voith Patent GmbH - Patentabteilung

(57) **Zusammenfassung**

Die Erfindung betrifft eine Vorrichtung ausgeführt zur betriebsgerechten Befüllung einer hydrodynamischen Kupplung (1) mit einer Betriebsflüssigkeit (10), wobei die hydrodynamische Kupplung ein Sichtfenster (2) und einen Referenzhalter (3) umfasst, wobei die Vorrichtung eine Messeinrichtung für eine Winkelmessung (4) umfasst, wobei die Messeinrichtung (4) geeignet ist an dem Referenzhalter (3) positioniert zu werden und wobei die Vorrichtung ein Informationssystem (5) umfasst, geeignet einen Füllstand (6) und/oder Füllstandswinkel (7, α2) mittels zumindest der Messeinrichtung (4) darzustellen.

## Beschreibung

Die Erfindung betrifft eine Vorrichtung ausgeführt zur betriebsgerechten Befüllung einer hydrodynamischen Kupplung mit einer Betriebsflüssigkeit, wobei die hydrodynamische Kupplung ein Sichtfenster und einen Referenzhalter umfasst.

Hydrodynamische Kupplungen enthalten zwei umlaufende Schaufelräder, die als Pumpenrad und Turbinenrad bezeichnet werden. Ein Betriebsmedium strömt von dem Pumpenrad in das Turbinenrad und von dem Turbinenrad wieder zurück in das Pumpenrad. Die Menge und die Art der Betriebsflüssigkeit bestimmen im Wesentlichen das Verhalten der hydrodynamischen Kupplung. Eine große Füllmenge führt zu einer höheren Belastung des Antriebsmotors und der Arbeitsmaschine beim Anlauf sowie zu einem höheren Anfahrmoment. Eine zu geringe Füllmenge führt zu einer höheren thermischen Belastung der Kupplung sowie zu einem niedrigeren Anfahrmoment.

Bei hydrodynamischen Kupplungen werden insbesondere die konstant gefüllten hydrodynamischen Kupplungen vor Inbetriebnahme mit dem Betriebsmedium gefüllt. In der Regel werden die hydrodynamischen Kupplungen ungefüllt ausgeliefert. Das Ermitteln eines leeren Füllstands kann ebenfalls über die Vorrichtung erfolgen, oder der Vorrichtung mitgeteilt werden. Ein Nachfüllen kann insbesondere durch Leckagen oder thermische Belastungen erforderlich werden. Auch ein Austausch des Betriebsmediums kann regelmäßig bei Wartungs- und Instandhaltungsarbeiten vorgesehen sein.

Aus dem Stand der Technik ist die EP3465105B1 bekannt, in der ein mobiles Gerät, wie beispielsweise ein Smartphone verwendet wird, um mittels Bilderkennung die Position zu bestimmen bei der ein Sichtfenster Betriebsflüssigkeit zeigt. Mit dieser Information soll ein Befüllen bzw. Nachfüllen der Betriebsflüssigkeit unterstützt werden. Die Bild- und Positionserkennung erscheint in der Praxis jedoch sehr aufwendig. Die vorliegende Erfindung zeigt hier ein vereinfachtes Verfahren, mit dem sich der Füllwinkel präziser bestimmen lässt.

Weiterhin ist im Stand der Technik die DE102008060165 A1 bekannt, die jedoch lediglich eine Hydrodynamische Kupplung mit einigen Merkmalen dieser Erfindung offenbart. Nicht jedoch eine Vorrichtung zur Füllung dieser hydrodynamischen Kupplung.

Die Aufgabe der Erfindung ist es, eine Vorrichtung und ein Verfahren bereitzustellen, wobei ein günstiges, vereinfachtes und präzises Befüllen und Nachfüllen von Betriebsflüssigkeit in eine hydrodynamische Kupplung ermöglicht wird. Weiterhin liegt der Erfindung die Aufgabe zugrunde den Füllstand einfach und präzise zu kontrollieren.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Erfindungsgemäß wird die Aufgabe durch eine Vorrichtung des Oberbegriffs gelöst, wobei die Vorrichtung eine Messeinrichtung für eine Winkelmessung umfasst, wobei die Winkelmessung mittels Gravitationssensor ausgeführt wird, und wobei die Vorrichtung eine Referenzhalter umfasst, der dazu vorgesehen ist, mit dem Kupplungsgehäuse in einer definierten Position verbunden zu werden, wobei die Referenzhalter geeignet ist, die Messeinrichtung für die Winkelmessung in einer im Bezug zum Kupplungsgehäuse festen Position zu halten, wobei die Messeinrichtung geeignet ist an dem Referenzpunkt positioniert zu werden und wobei die Vorrichtung ein Informationssystem umfasst, geeignet einen Füllstand und/oder Füllstandswinkel mittels zumindest der Messeinrichtung darzustellen..

Vorteilhaft ist dabei, dass die Messeinrichtung nicht im Betrieb der hydrodynamischen Kupplung an das Kupplungsgehäuse angeordnet ist, sondern nur während einer Wartung oder der ersten Installation der Kupplung. Die Vorrichtung wird dabei vorteilhaft verwendet, um ein erstmaliges Befüllen der Kupplung zu ermöglichen. Eine weitere vorteilhafte Verwendung der Vorrichtung kann bei der Wartung eine Überprüfung des Füllstandes der Betriebsflüssigkeit umfassen. So kann mit der Vorrichtung einfach und sehr präzise der Winkel ermittelt werden, bei dem in dem Sichtfenster Betriebsflüssigkeit sichtbar sein soll. Ein Sichtfenster im Sinne dieser Erfindung hat die Funktion Betriebsflüssigkeit im Inneren der Kupplung von außerhalb der Kupplung sichtbar zu machen. Dabei kann ein Sichtfenster ein druckbeständiges Glas umfassen, oder mittels einer Öffnung, wie einer Schrauböffnung, einen Zugang zum Innenraum der Kupplung temporär freigeben.

Weiterhin vorteilhaft ist eine Vorrichtung, wobei die Vorrichtung ein mobiles Gerät umfasst, wobei das mobile Gerät mit einem Gravitationssensor ausgestattet ist, geeignet den Winkel des mobilen Gerätes darzustellen.

Das mobile Gerät kann dabei mehrere Funktionen der Vorrichtung umfassen. Besonders vorteilhaft ist dabei, wenn das mobile Gerät als Smartphone ausgeführt ist. Ein Smartphone ist dabei ein Mobiltelefon umfassend Computer-Funktionalitäten, Konnektivität-Funktionalität sowie zumindest einen Gravitations- und Positionssensor. So kann das mobile Gerät auch direkt das Informationssystem und einen Datenspeicher umfassen. Der Datenspeicher kann in dem mobilen Gerät selbst vorgesehen sein, oder es kann vorgesehen sein, dass das mobile Gerät auf einen externen Datenspeicher zugreift. Bei dem externen Datenspeicher kann es sich um einen zentralen Datenspeicher, z.B. des Kupplungsherstellers handeln, in dem die Daten der verschiedenen Kupplungstypen hinterlegt sind. Es kann sich aber auch um einen externen an der Kupplung selbst angeordneten Datenspeicher handeln. So kann an der Kupplung ein Datenspeicher vorgesehen sein, in dem die Daten der Kupplung, wie insbesondere Sollfüllmenge und Sollposition des Sichtfensters mit hälftig sichtbarem Flüssigkeitsstand bei Befüllung mit der Sollfüllmenge hinterlegt ist. Bei einem an der Kupplung selbst angeordneten Datenspeicher kann es sich um einen nur lesbaren oder um einen lesbaren und beschreibbaren Datenspeicher handeln.

Weiterhin vorteilhaft ist eine Vorrichtung, wobei der Referenzhalter eine ebene Fläche oder zumindest einen ebenen Anschlag umfasst, geeignet das mobile Gerät in einer definierten fixen Position an der hydrodynamischen Kupplung auszurichten.

Eine Ausrichtung des mobilen Gerätes in einer fixierten Position an dem drehbaren Gehäuse der hydrodynamischen Kupplung ermöglicht das mobile Gerät als Messeinrichtung für eine Winkelmessung zu verwenden. Dabei kann die Position des mobilen Gerätes in Bezug zu dem Gehäuse der hydrodynamischen Kupplung gesetzt werden. So entspricht der Winkel des mobilen Gerätes im Bezug zur Gravitation dem Winkel des Referenzhalters der hydrodynamischen Kupplung. Der Referenzhalter ist dabei vorteilhaft im radial äußeren Bereich des Kupplungsgehäuses angeordnet. So kann der Referenzhalter der Drehbewegung der Kupplung um die Drehachse der Kupplung folgen. Der Anschlag oder die ebene Fläche an dem Referenzhalter ermöglicht dabei das mobile Gerät an der Kupplung fixiert wird, wobei dies vorteilhaft mit Halterung für das mobile Gerät ausgeführt werden kann. Das mobile Gerät kann auch mit einem Anschlag aus zumindest einer ebenen Fläche, oder einem L-Förmigen Anschlag manuell in Position gehalten werden. Auch eine Halterung in die das mobile Gerät geklippt oder eingespannt wird kann vorteilhaft sein. So kann der Drehwinkel von einem Ausgangswinkel α₁ bis zu einem Füllstandswinkel α₂ gemessen werden. Auch ein Anschlag an zumindest zwei an dem Gehäuse angebrachten Anschlagsschrauben ist möglich, wobei es vorteilhaft ist, den Referenzhalter entsprechend gut sichtbar zu markieren. Eine vorteilhafte Ausrichtung des Anschlags oder der Anschlagsfläche ist dabei tangential zum Umfang des Gehäuses der Kupplung.

Weiterhin vorteilhaft ist eine Vorrichtung wobei das Informationssystem bei einer Befüllung der hydrodynamischen Kupplung mit Betriebsflüssigkeit einen Winkel (a) anzeigt, bei dem das Sichtfenster Betriebsflüssigkeit zeigen soll.

Dabei kann das Informationssystem zudem den Winkel fortlaufend anzeigen, wobei das Informationssystem ein Hilfsmittel darstellt, bis der richtige Winkel mittels Drehung der Kupplung eingestellt ist. Befindet sich die Kupplung nun in dem ausgewählten Winkel, kann diese über eine Füllvorrichtung mit Betriebsflüssigkeit befüllt werden, bis die Betriebsflüssigkeit in dem Sichtfenster sichtbar ist.

Weiterhin vorteilhaft ist eine Vorrichtung wobei das Informationssystem geeignet ist die Menge an Betriebsflüssigkeit zu berechnen, die der hydrodynamischen Kupplung zur betriebsgerechten Befüllung zugeführt werden muss.

Dafür kann die Information des Füllstandes dem Informationssystem zugeführt werden, indem beispielsweise ein Winkel a, der Füllstandswinkel α₂ oder ein Anfangswinkel α₁ in dem Informationssystem bestätigt wird. Bei dem Befüllen kann zunächst der Referenzhalter vorteilhaft auf eine Position Vertikale über der Rotationsachse ausgerichtet werden.

Weiterhin vorteilhaft ist eine Vorrichtung, wobei das Informationssystem geeignet ist, Informationen zur Art der hydrodynamischen Kupplung zu erfassen und/oder zu verarbeiten, wobei der zur Befüllung notwendige Füllstandswinkel unter Berücksichtigung dieser Information angezeigt wird.

Die Bestimmung des Kupplungstyps kann zum Beispiel durch Auslesen eines Typenschildes oder durch Auslesen eines vorgesehenen Datenspeichers oder auch durch die Erfassung der Außenkontur und nachfolgendem Abgleich der verschiedenen Kupplungstypen in der Datenbank erfolgen. Wichtige Informationen zu der Art der Kupplung sind dabei vor allem das freie Volumen im Innenraum, sowie die für einen Betrieb günstige Füllmenge für Betriebsflüssigkeit.

Weiterhin vorteilhaft ist ein Verfahren zur Ermittlung eines Füllstandswinkel einer teilweise mit Betriebsflüssigkeit befüllten hydrodynamischen Kupplung, mittels Verwendung einer Vorrichtung nach einem der Ansprüche, wobei
- ein Kupplungsgehäuse derart gedreht wird, dass der Referenzhalter in einer definierten Anfangsposition in einem Ausgangswinkel angeordnet ist
- ein mobiles Gerät an dem Referenzhalter positioniert wird
- das Kupplungsgehäuse in Rotationsrichtung gedreht wird bis ein Sichtfenster mit Betriebsflüssigkeit gefüllt ist,
wobei das mobile Gerät geeignet ist die Winkel zwischen Ausgangsposition und der Position, bei der das Sichtfenster mit Betriebsflüssigkeit gefüllt ist, zu messen und somit den Füllstandswinkel zu ermitteln.

Um den Füllstandswinkel zu ermitteln, ist es vorteilhaft das Kupplungsgehäuse zunächst in einen Zustand zu drehen, bei dem das Sichtfenster nicht von Betriebsflüssigkeit bedeckt wird. Dafür wir der Referenzhalter zunächst üblicherweise in die 12-Uhr Position gedreht. Der Anfangswinkel wird dabei mittels der Messeinrichtung für Winkelmessung ermittelt. Diese kann gegenüber der Gravitationsrichtung die höchste Stelle darstellen. In der Position des Anfangswinkels ist das Sichtfenster über dem üblichen Füllstand der Betriebsflüssigkeit angeordnet. Sollte die Zugänglichkeit des Kupplungsgehäuses beispielsweise über eine Einhausung beschränkt sein, kenn es vorteilhaft sein den Referenzhalter an einen anderen Anfangswinkel auf dem Kupplungsgehäuse anzuordnen. Wichtig bleibt dann nur, dass das Sichtfenster in der Startposition zur Ermittlung des Füllstandswinkel, an dem Anfangswinkel, über dem Füllstand der Kupplung angeordnet ist.

Weiterhin vorteilhaft ist ein Verfahren wobei mittels Informationssystems aus dem Füllstandswinkel der Füllstand ermittelt wird, wobei Informationen zu der Art der hydraulischen Kupplung berücksichtig werden.

Die Bestimmung der Art der hydraulischen Kupplung kann zum Beispiel durch Auslesen eines Typenschildes oder durch Auslesen eines vorgesehenen Datenspeichers oder auch durch die Erfassung der Außenkontur und nachfolgendem Abgleich der verschiedenen Kupplungstypen in der Datenbank erfolgen. Wichtige Informationen zu der Art der Kupplung sind dabei vor allem das freie Volumen im Innenraum, sowie die für einen Betrieb günstige Füllmenge für Betriebsflüssigkeit. Der für den Betrieb günstige Füllstand ist dabei von der Art der Kupplung abhängig und kann beispielsweise mit der Größe der Kupplung anders sein. Auch das Ermitteln eines Füllstandes in Litern kann vorteilhaft sein, beispielsweise für einen Wechsel der Betriebsflüssigkeit.

Weiterhin vorteilhaft ist ein Verfahren wobei ein Informationssystem aus dem Füllstandswinkel die Menge an Öl bestimmt, die zur betriebsgerechten Befüllung zu-oder abgeführt werden muss, wobei Informationen zum Typ der hydraulischen Kupplung berücksichtig werden.

Für das Berechnen der Menge an Betriebsflüssigkeit, die zur Befüllung der Kupplung verwendet werden muss, werden Informationen zur Größe der Kupplung verwendet. Hier ist das Volumen der Kupplung relevant, insbesondere das freie Volumen innerhalb des Kupplungsgehäuse. Je nach Füllstand und/oder Füllstandswinkel kann hier eine Berechnung der Menge vorhandener Betriebsflüssigkeit erfolgen. Je nach Art und Anwendungsfall der Kupplung ist für den Betrieb eine andere Menge and Betriebsflüssigkeit vorteilhaft. Unter Berücksichtigung dieser Informationen zu Art und Anwendungsfall kann nun präzise die Menge an Getriebeflüssigkeit ermittelt werden, die zu einer Befüllung erforderlich sind. Auch Informationen zu dem Alter der Kupplung, der durchgeführten Wartungsarbeiten, der Belastung und/oder üblichen Betriebstemperatur können für die Bestimmung der Menge an Betriebsflüssigkeit, die für einen Betrieb vorteilhaft ist, berücksichtigt werden. Eine hydrodynamische Kupplung präzise auf den vorgesehen Füllstand zu befüllen, kann zudem einen energieeffizienten Betrieb der Kupplung ermöglichen.

Weiterhin vorteilhaft ist ein Verfahren zum Einstellen eines Füllstandswinkel zum Befüllen einer hydrodynamischen Kupplung mit Betriebsflüssigkeit, mittels Verwendung einer Vorrichtung nach einem der vorherigen Ansprüche, wobei ein mobiles Gerät an dem Referenzhalter positioniert wird, das Kupplungsgehäuse in Rotationsrichtung gedreht wird wobei das mobile Gerät eine Messeinrichtung für eine Winkelmessung umfasst und bei Erreichen eines Füllstandswinkels, diesen anzeigt oder kenntlich macht.

Die hydrodynamische Kupplung wird meist ungefüllt ausgeliefert bzw. an ihrem Bestimmungsort installiert. Für eine Erstbefüllung kann das Verfahren vorteilhaft sein, da die Verwendung einer Vorrichtung nach einem der Ansprüche hier eine präzise Befüllung ermöglicht. Wichtig ist dabei auch, dass bereits vor der Befüllung die Menge an Betriebsflüssigkeit, die zur Befüllung benötigt wird, durch das Informationssystem angezeigt wird, was eine entsprechende Vorbereitung vereinfacht.

Weiterhin vorteilhaft ist ein Verfahren, wobei die im Füllstandswinkel positionierte hydrodynamische Kupplung soweit mit Betriebsflüssigkeit über eine Füllvorrichtung befüllt wird bis in dem Sichtfenster Betriebsflüssigkeit erkennbar ist.

Die hydrodynamische Kupplung kann so vor der Befüllung bereits in eine vorteilhafte Winkelposition gedreht werden, in der ein Befüllen vereinfacht wird, und das Sichtfenster bereits in der Position ist, die eine vorteilhafte, betriebsgerechte Befüllung anzeigen kann. Ist das Sichtfenster als temporär geöffnetes Loch im Kupplungsgehäuse ausgeführt, kann eine Befüllung in dem gewählten Füllstandswinkel erfolgen. Verluste von Betriebsflüssigkeit werden so vorteilhaft minimiert.

Im Folgenden wird die Erfindung anhand von Figuren erläutert. Die Figuren zeigen im Einzelnen:
Figur 1: Schematische Darstellung einer hydrodynamischen Kupplung.
Figur 2: Weitere schematische Darstellung einer hydrodynamischen Kupplung mit Merkmalen der Erfindung.

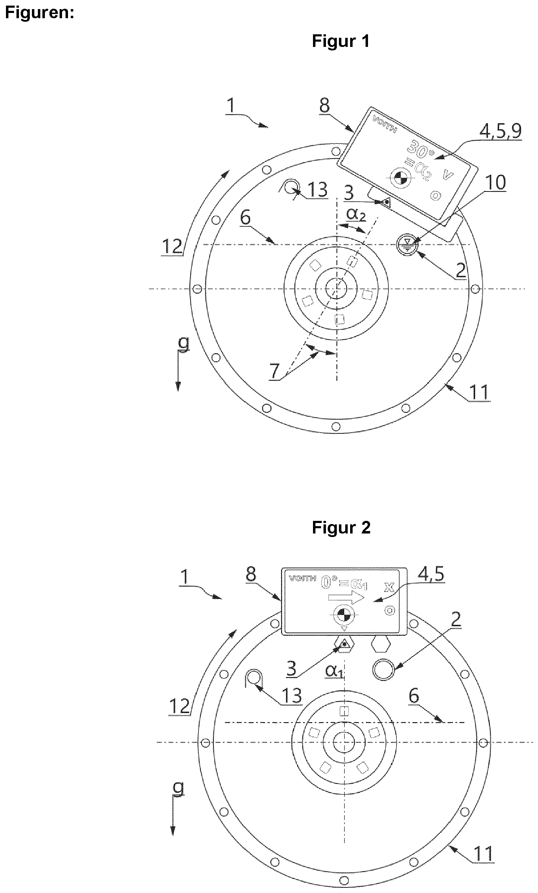

Figur 1 zeigt eine nicht maßstäbliche schematische Darstellung einer hydrodynamischen Kupplung 1. Das Kupplungsgehäuse 11 der hydrodynamischen Kupplung 1 ist dabei in Rotationsrichtung gedreht dargestellt. Der Drehwinkel entspricht in dieser Darstellung beispielhaft dem Füllstandswinkel 7, α₂. Der Füllstandswinkel 7, α₂ ist dabei beispielhaft bei 30° eingestellt, gemessen von einer vertikalen gedanklichen Linie durch die Drehachse. In der Darstellung ist an der hydrodynamischen Kupplung 1 ein mobiles Gerät 8 angeordnet. Das mobile Gerät ist dabei an einem Referenzhalter 3 angeordnet. Der Referenzhalter 3 ist in diesem Beispiel auf einer Halterung für das mobile Gerät 8 angeordnet. Die Halterung umfasst dabei in diesem Beispiel zwei optionale Flächen, die eine präzise Anordnung des mobilen Gerätes 8 im Bezug zum Kupplungsgehäuse 11 ermöglichen. Das mobile Gerät 8 umfasst eine Messeinrichtung für eine Winkelmessung 4, ein Informationssystem 5 umfassend zumindest ein Display und zumindest einen Gravitationssensor 9 zur Ermittlung von einem Füllstandswinkel 7, α₂. Das Sichtfenster 2 zeigt dabei hälftig den Füllstand 6 von Betriebsflüssigkeit 10 im Inneren des Kupplungsgehäuses 11. Im Informationssystem 5 wird dabei der Winkel angezeigt, der in diesem in der Darstellung der Füllstandswinkel 7, α₂. ist. Sollte der in diesem Füllstandswinkel noch nicht im Sichtfenster 2 zu sehen sein, kann Betriebsflüssigkeit 10 über die Füllvorrichtung 13 zugeführt werden. Das mobile Gerät 8 kann zudem Informationen über die Art der Kupplung erhalten. Dabei können Informationen über eine Kommunikation von einem anderen Informationssystem bezogen werden, oder über ein Interface direkt dem Informationssystem 5 zugeführt werden. Dies kann beispielsweise über eine manuelle Interaktion erfolgen, oder über das Einlesen von einem Speichermedium, auch beispielsweise mittels RFID Sender der direkt in das Kupplungsgehäuse 11 integriert ist.

Figur 2 zeigt eine weitere nicht maßstäbliche schematische Darstellung einer hydrodynamischen Kupplung 1. Die hydrodynamische Kupplung 1, umfassend das Kupplungsgehäuse 11 ist dabei derart ausgerichtet, dass der Referenzhalter 3 an dem gegenüber der Gravitationskraft g höchsten Punkt angeordnet ist. So ist der Referenzhalter in der sogenannten 12-Uhr Position angeordnet. An dem Kupplungsgehäuse 11 ist tangential zum Referenzhalter 3 ein mobiles Gerät 8 angeordnet. Die Position des mobilen Gerätes 8 ist dabei unmittelbar über dem Referenzhalter 3, wobei der Referenzhalter 3 an einem auf dem Informationssystem 5 dargestellten weiteren Referenzhalter angeordnet wird. Die präzise Anordnung des mobilen Gerätes 8 an dem Referenzhalter 3 wird dabei in diesem Beispiel von zwei hexagonalen Schrauben, oder einer nicht bildlich dargestellten Halterung, oder einem nicht bildlich dargestellten Anschlag, unterstütz. Das Sichtfenster 2 zeigt keine Betriebsflüssigkeit 10, da das Kupplungsgehäuse 11 entweder noch nicht befüllt ist oder der Füllstand 6 sich unterhalb des Sichtfensters 2 befindet. Das mobile Gerät 8 umfasst eine Messeinrichtung 4 für einen Winkel mittels Gravitationssensor 9. So kann von dem Informationssystem 5 ein Winkel vorgeschlagen werden, bis zu dem das Kupplungsgehäuse 11 gedreht werden kann. Sollte bei diesem einzustellenden Drehwinkel des Kupplungsgehäuses weiterhin keine Betriebsflüssigkeit 10 im Sichtfenster 2 zu sehen sein, kann das Kupplungsgehäuse 11 mittels der Füllvorrichtung 13 mit Betriebsflüssigkeit 10 befüllt werden. Die Berechnung des für den Betrieb der hydrodynamischen Kupplung optimalen Füllstandes 6 kann vorteilhaft durch das Informationssystem 5 erfolgen. Dafür können auch Informationen zur Art der hydrodynamischen Kupplung berücksichtig werden, insbesondere das freie Volumen, das mit Betriebsflüssigkeit gefüllt werden muss. Auch eine Berücksichtigung von weiteren Informationen kann für eine optimale Befüllung vorteilhaft sein. So können beispielsweise Betriebsart, Betriebstemperatur, Wartungsstatus und bereits geleistete Betriebsstunden für die Befüllung der hydrodynamischen Kupplung 1 relevant sein.

### Bezugszeichenliste

- 1: Hydrodynamische Kupplung
- 2: Sichtfenster
- 3: Referenzhaltevorrichtung
- 4: Messeinrichtung für Winkelmessung
- 5: Informationssystem
- 6: Füllstand
- 7: Füllstandswinkel
- 8: Mobiles Gerät
- 9: Gravitationssensor
- 10: Betriebsflüssigkeit
- 11: Kupplungsgehäuse
- 12: Rotationsrichtung
- 13: Füllvorrichtung

- g: Gravitationskraft
- α: Winkel
- α₁: Ausgangswinkel
- α₂: Füllstandswinkel

## Patentansprüche

1. Vorrichtung ausgeführt zur betriebsgerechten Befüllung einer hydrodynamischen Kupplung (1) mit einer Betriebsflüssigkeit (10), wobei die hydrodynamische Kupplung (1) ein Kupplungsgehäuse (11) mit einem Sichtfenster (2) umfasst, **dadurch gekennzeichnet, dass** die Vorrichtung eine Messeinrichtung für eine Winkelmessung (4) umfasst, wobei die Winkelmessung (4) mittels Gravitationssensor (9) ausgeführt wird, und wobei die Vorrichtung eine Referenzhalter (3) umfasst, der dazu vorgesehen ist, mit dem Kupplungsgehäuse (11) in einer definierten Position verbunden zu werden, wobei die Referenzhalter (3) geeignet ist, die Messeinrichtung für die Winkelmessung (4) in einer im Bezug zum Kupplungsgehäuse (11) festen Position zu halten und wobei die Vorrichtung ein Informationssystem (5) umfasst, geeignet einen Füllstand (6) und/oder Füllstandswinkel (7, α₂) darzustellen.

2. Vorrichtung nach Anspruch 1, **dadurch gekennzeichnet, dass** die Messeinrichtung zur Winkelmessung (4) als mobiles Gerät (8) ausgeführt ist, wobei das mobile Gerät (8) mit einem Gravitationssensor (9) ausgestattet ist, geeignet den Winkel des mobilen Gerätes (8) darzustellen.

3. Vorrichtung nach Anspruch 1 oder 2, **dadurch gekennzeichnet, dass** der Referenzhalter (3) eine ebene Fläche oder zumindest einen ebenen Anschlag umfasst, geeignet Messeinrichtung zur Winkelmessung (4) in einer in Bezug zum Kupplungsgehäuse (11) definierten fixen Position auszurichten.

4. Vorrichtung nach einem der vorherigen Ansprüche, **dadurch gekennzeichnet, dass** das Informationssystem (5) bei einer Befüllung der hydrodynamischen Kupplung (1) mit Betriebsflüssigkeit (10) einen Winkel (a) anzeigt, bei dem das Sichtfenster (2) Betriebsflüssigkeit (10) zeigen soll.

5. Vorrichtung nach einem der vorherigen Ansprüche, **dadurch gekennzeichnet, dass** das Informationssystem (5) geeignet ist die Menge an Betriebsflüssigkeit (10) zu berechnen, die der hydrodynamischen Kupplung (1) zur betriebsgerechten Befüllung zugeführt werden muss.

6. Vorrichtung nach einem der vorherigen Ansprüche, **dadurch gekennzeichnet, dass** das Informationssystem (5) geeignet ist, Informationen zur Art der hydrodynamischen Kupplung (1) zu erfassen und/oder zu verarbeiten, wobei der zur Befüllung notwendige Füllstandswinkel (7) unter Berücksichtigung dieser Information angezeigt wird.

7. Verfahren zur **Ermittlung eines** Füllstandswinkel (7, α₂) einer teilweise mit Betriebsflüssigkeit (10) befüllten hydrodynamischen Kupplung (1), mittels Verwendung einer Vorrichtung nach einem der vorherigen Ansprüche, **dadurch gekennzeichnet, dass**
- ein Kupplungsgehäuse (11) derart gedreht wird, dass der Referenzhalter (3) in einer definierten Anfangsposition in einem Ausgangswinkel (α₁) angeordnet ist
- ein mobiles Gerät (8) an dem Referenzhalter (3) positioniert wird
- das Kupplungsgehäuse (11) in Rotationsrichtung (9) gedreht wird bis ein Sichtfenster (2) mit Betriebsflüssigkeit (10) gefüllt ist,
wobei das mobile Gerät geeignet ist die Winkel (a) zwischen Ausgangsposition und der Position, bei der das Sichtfenster (2) mit Betriebsflüssigkeit (10) gefüllt ist, zu messen und somit den Füllstandswinkel (7, α₂) zu ermitteln.

8. Verfahren nach Anspruch 7, **dadurch gekennzeichnet, dass** mittels Informationssystems (5) aus dem Füllstandswinkel (7, α₂) der Füllstand (6) ermittelt wird, wobei Informationen zu der Art der hydraulischen Kupplung (1) berücksichtig werden.

9. Verfahren nach Anspruch 7 oder Anspruch 8, **dadurch gekennzeichnet, dass** ein Informationssystem (5) aus dem Füllstandswinkel (7, α₂) die Menge an Öl bestimmt, die zur betriebsgerechten Befüllung zu- oder abgeführt werden muss.

10. Verfahren zum Einstellen eines Füllstandswinkel (7, α₂) zum Befüllen einer hydrodynamischen Kupplung (1) mit Betriebsflüssigkeit (10), mittels Verwendung einer Vorrichtung nach einem der vorherigen Ansprüche 1 bis 6, **dadurch gekennzeichnet, dass** ein mobiles Gerät (8) an dem Referenzhalter (3) positioniert wird, das Kupplungsgehäuse (11) in Rotationsrichtung (12) gedreht wird wobei das mobile Gerät (8) eine Messeinrichtung für eine Winkelmessung (4) umfasst und bei Erreichen eines Füllstandswinkel (7), diesen anzeigt oder kenntlich macht.

11. Verfahren nach Anspruch 9, **dadurch gekennzeichnet, dass** die im Füllstandswinkel (7) positionierte hydrodynamische Kupplung (1) so weit mit Betriebsflüssigkeit (10) über eine Füllvorrichtung (13) befüllt wird bis in dem Sichtfenster (2) Betriebsflüssigkeit (10) erkennbar ist.
